Europäisches Patentamt

European Patent Office

Office européen des brevets

(19)

(11) Veröffentlichungsnummer : **0 243 877
B1**

(12) **EUROPÄISCHE PATENTSCHRIFT**

(45) Veröffentlichungstag der Patentschrift :
24.01.90

(21) Anmeldenummer : 87105947.3

(22) Anmeldetag : 23.04.87

(51) Int. Cl.⁵ : **G 11 B 23/04, G 11 B 23/08**

(54) **Magnetbandkassette.**

(30) Priorität : 02.05.86 DE 3614898

(43) Veröffentlichungstag der Anmeldung :
04.11.87 Patentblatt 87/45

(45) Bekanntmachung des Hinweises auf die Patenterteilung : 24.01.90 Patentblatt 90/04

(84) Benannte Vertragsstaaten :
CH DE FR GB IT LI NL

(56) Entgegenhaltungen :
EP–A– 0 150 987
EP–A– 0 180 759
DE–A– 3 109 442
DE–A– 3 111 304
DE–A– 3 330 038

(73) Patentinhaber : Agfa-Gevaert AG

D-5090 Leverkusen 1 (DE)

(72) Erfinder : Hölbl, Dieter
Ottobrunner Strasse 8
D-8000 München 83 (DE)
Erfinder : Zeroni, Ludwig
Nelkenstrasse 40
D-8012 Ottobrunn (DE)
Erfinder : Pertzsch, Albert, Dipl.-Ing.
Leutstettener Strasse 29
D-8000 München71 (DE)

EP 0 243 877 B1

**Beschreibung**

Die Erfindung betrifft eine Magnetbandcassette, insbesondere eine Compact-Cassette, deren Gestaltung für verbesserte Maßgenauigkeit und Formstabilität sorgt.

Compact-Cassetten werden in der Regel in der Weise hergestellt, daß obere und untere Gehäuseteile durch Spritzgießen gebildet werden, in den Gehäuseraum Wickelkerne, auf die Wickelkerne aufgewickeltes Magnetband, Führungsrollen, ein Trenn- oder Abschirmblech, ein Magnetkopf-Andruckpolster und eine Feder sowie andere erforderliche Bauteile eingepaßt werden und dann die beiden Gehäuseteile über Schrauben entlang ihrer zusammenpassenden Umfangswände verbunden werden. Die oberen und unteren Gehäusehälften sind derart komplementär ausgebildet, daß bei ihrem Zusammenfügen alle ihre Teile gemeinsam die vorgesehene Montageeinheit entstehen lassen.

Bei den oberen und unteren Gehäuseteilen der oben erläuterten Compact-Cassette stellt sich häufig das Problem unzureichender Maßgenauigkeit aufgrund von Spannungen, die beim Spritzgießen entstehen. Das Unvermögen, eine konstante Maßgenauigkeit gewährleisten zu können, ist um so problematischer, als ein steigendes Bedürfnis nach Hochleistungsaufzeichnung und -wiedergabe mit Magnetbändern besteht, die mit niedrigerer Geschwindigkeit als bisher angetrieben werden.

Magnetbandcassetten mit verbesserter Dimensionsstabilität können erhalten werden, wenn die Cassettenhälften miteinander verschweißt statt verschraubt werden. Andererseits lehrt die DE-OS 34 40 524, daß die Formungenauigkeiten ihre Ursache in der unausgewogenen Dimensionierung der Gehäuseteile haben. Eine Verbesserung kann dadurch erhalten werden, daß die in der Kopfkammer beiderseits vorgesehenen zwei Führungsrippen höher als die Breite des Magnetbandes sind, während die gesamte hintere Trennwand der Kopfkammer etwa die halbe Höhe der Führungsrippen aufweist.

Daneben gibt es zahlreiche Veröffentlichungen, die Magnetbandcassetten beschreiben, welche aus mehr als zwei Teilen zusammengesetzt sind. In der US 4 267 986, der DE-OS 30 19 442 und der DE-OS 31 11 304 sind dreiteilige Cassetten beschrieben, die aus einem vorzugsweise flachen und transparenten Boden- und Deckelteil sowie aus einem Zwischenrahmen bestehen, der entweder aus Metall oder aus Verbundharzpolymer gefertigt ist. Diese Ausführungen haben den Vorteil besserer Dimensionsstabilität, jedoch muß der Zwischenrahmen an den bandführenden Teilen einer Nachbehandlung unterzogen werden, um die geforderten Oberflächeneigenschaften zu erhalten. Dieser zusätzliche Arbeitsgang erhöht die Herstellkosten.

Andere Vorschläge betreffen Cassetten mit konventionellem Boden- und Deckelteil mit Seitenwänden, wobei jedoch eine separate Kopfkammer vorgesehen ist. In der DE-OS 25 26 484 ist eine aus Metallblech geformte Kopfkammer beschrieben, die DE-PS 23 48 994 sowie die EP 0 151 210 schützen eine aus hartem Werkstoff beispielsweise Polyacetal bestehende Kopfkammer, während in der DE-OS 33 47 485 eine aus Keramikmaterial zusammengesetzte Kopfkammer beschrieben ist. In den genannten Veröffentlichungen unterscheiden sich außerdem der Aufbau sowie die Verankerung der Kopfkammer im Boden- und Deckelteil; die beschriebenen Ausführungen reduzieren die Cassettenfehler durch Spannungsverformungen, ohne sie aber völlig zu beseitigen, da die Seitenteile wie schon beschrieben nach wie vor in konventioneller Spritzgießweise in dem Bodenbeziehungsweise Deckelteil integriert sind.

In der DE-OS 33 30 038 wird eine vierteilige Cassette beschrieben, die aus je einem metallenen Boden- und Deckrahmen und aus zwei im wesentlichen ebenen Plastikplatten, welche die bandführenden Teile enthalten, besteht. Diese Ausführung bedingt eine relativ komplizierte Montage sowie ein hohes Gewicht der Cassette. In dieser Schrift werden weitere Nachteile, die die Verwendung von Metallteilen beispielsweise auf die Klangwiedergabe haben kann, diskutiert.

Der vorliegenden Erfindung liegt daher die Aufgabe zugrunde, eine verbesserte Magnetbandcassette zu schaffen, die die oben genannten Mängel, die herkömmlichen Magnetbandcassetten anhaften, beseitigt. Im einzelnen besteht die Aufgabe für die Erfindung darin, eine Compact-Cassette zu schaffen, bei der eine Deckplatte, eine Bodenplatte, ein Zwischenrahmen und eine Kopfkammer, die eine Vielzahl von Bandführungsteilen enthält, welche den vorderen Öffnungen des Cassettengehäuses entgegenstehen und nahe diesen vorderen Öffnungen angeordnet sind, vorgesehen sind. Außerdem soll eine Magnetbandcassette geschaffen werden, welche in allen bandführenden Teilen ausgezeichnete Eigenschaften bezüglich Genauigkeit in der vertikalen Ausrichtung, Steifigkeit, Abriebfestigkeit, Wärmeleitfähigkeit und so weiter hat. Die zu schaffende Magnetbandcassette soll die verschiedenen Gründe für die Verschlechterung der Tonqualität beseitigen.

Erfindungsgemäß wurde die Aufgabe gelöst mit einer Magnetbandcassette, insbesondere Compact-Cassette mit zwei planparallel angeordneten Bandwickeln, zusammengesetzt aus einer im wesentlichen flachen vorzugsweise aus transparentem Kunststoff bestehenden Boden- sowie Deckplatte, einem Zwischenrahmen, der zueinander parallele flache Ober- und Unterseiten aufweist und Raum zur Aufnahme der Bandwickel bietet. Umlenkrollen an der Vorderseite der Cassette, einer Kammer mit Andruckfeder für den Magnetkopf sowie mit Bandführungselementen an der Vorderseite der Cassette sowie Befestigungselemente zum Zusammenbau der Cassette, dadurch gekennzeichnet, daß

der Zwischenrahmen etwa U-förmig ausgebildet ist und die gesamte Rückwand sowie die beiden Seitenwände, aber nur den die Umlenkrollen abdeckenden Teil der Vorderwand der Cassette umfaßt, während der restliche Teil der Vorderseite von einer separaten Kammer mit der Andruckfeder für den Magnetkopf sowie mit den Bandführungselementen gebildet ist

die Ober- und die Unterseite des Zwischenrahmens an seiner Innen- und/oder Außenkante leistenartige Vorsprünge (Federn) aufweist, die bei zusammengesetzter Cassette in entsprechenden Nuten der Boden- und der Deckplatte sitzen, wobei die Anordnung der Nut und Feder bezüglich Zwischenrahmen sowie Boden- und Deckplatte auch vertauscht sein kann.

Einzelheiten der Erfindung gehen aus den Unteransprüchen, der Beschreibung und den Zeichnungen hervor.

Die Erfindung wird nun anhand der Zeichnungen näher beschrieben und zwar zeigt

Figur 1 eine perspektivische Explosionsdarstellung eines Ausführungsbeispiels für eine Magnetbandcassette gemäß der vorliegenden Erfindung

Figuren 2a/2b Querschnitte entlang der Linie II der Figur 1 durch die Deckplatte, den Zwischenrahmen und die Bodenplatte der Magnetbandcassette

Figur 3 eine Draufsicht auf die Kopfkammer.

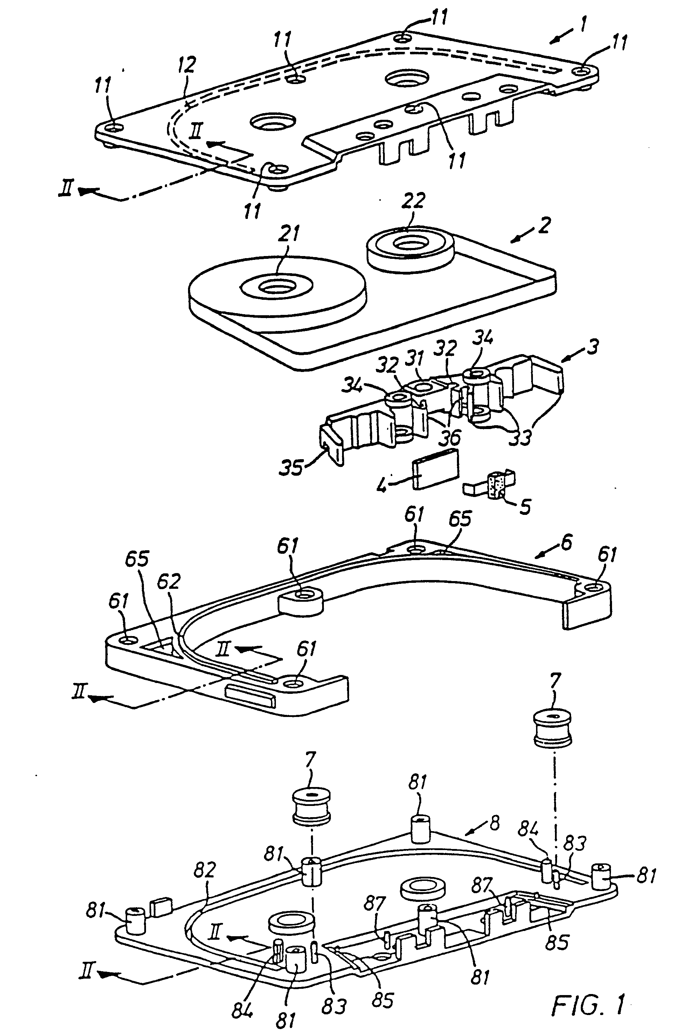

In Figur 1 bezeichnet das Bezugszeichen 1 die Deckplatte, 2 das zwischen den Wickelnaben 21 und 22 auf- und abwickelbare Magnetband, 3 die Kopfkammer, 4 einen Abschirmkörper, 5 ein federnd befestigtes Andruckkissen, 6 den Zwischenrahmen, 7 die Führungsrollen und 8 die Bodenplatte der Magnetbandcassette.

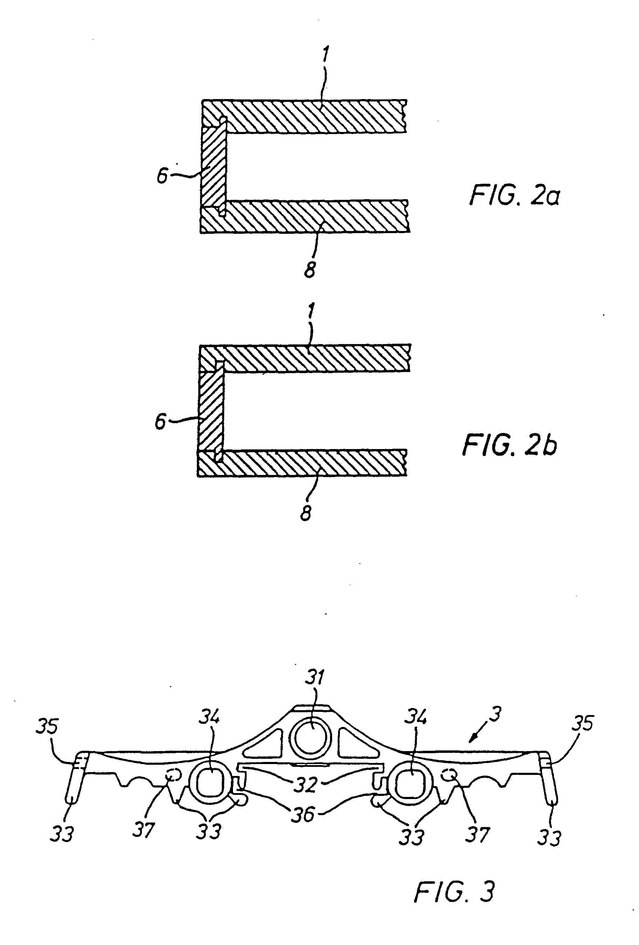

Beim Zusammensetzen der Magnetbandcassette werden zunächst die Führungsrollen 7 auf die Stifte 83 der Bodenplatte 8 aufgesetzt, danach wird der Zwischenrahmen 6 eingesetzt, wobei die in den Seitenteilen sowie im hinteren Teil der Bodenplatte 8 befindlichen zylindrischen Pfosten 81 in Ausnehmungen 61 des Zwischenrahmens eingreifen. Wie in der Figur 1 perspektivisch und in der Figur 2 im Querschnitt gezeichnet, enthält der Zwischenrahmen 6 bevorzugt sowohl auf seiner Ober- wie Unterseite Vorsprünge (Federn) 62, die beim Zusammensetzen der Magnetbandcassette in entsprechend verlaufende Nuten 12 beziehungsweise 82 der Deck- und Bodenplatte eingreifen. Nut und Feder können entweder umlaufend, so wie in Figur 1 dargestellt, oder auch unterbrochen ausgebildet sein. Außerdem kann auch die Feder an der Boden- und Deckplatte und entsprechend die Nut am Zwischenrahmen 6 ausgebildet sein. Wie Figur 2a und 2b zeigen, kann die Deck- und/oder Bodenplatte innerhalb des durch Nut und Feder gegebenen die Bandwickel enthaltenden Raums der Cassette eine unterschiedliche Dicke zum benachbart den Schmalseiten liegenden Außenteil besitzen. In einer bevorzugten Ausführung ist die Feder oder Nut an der Innenseite des Zwischenrahmens angeordnet. Aus spritztechnischen Gründen können an den hinteren Ecken des Zwischenrahmens 6 dreieckförmige Vertiefungen 65 vorhanden sein. Die vorderen Teile des Zwischenrahmens 6 ragen so weit in die Vorderseite der Cassette hinein, daß sie die Umlenkrollen 7 im wesentlichen abdecken.

Wenn die Kopfkammer 3, welche in der Figur 3 in Draufsicht gezeichnet ist, montiert ist, wird noch das Abschirmblech 4 eingesetzt, wobei dessen Ecken in die beidseitigen Aussparungen 32 eingreifen, anschließend wird die Andruckfeder 5 mit dem darauf befestigten Andruckkissen in die Kopfkammer 3 eingesetzt, indem die gebogenen Enden der Andruckfeder 5 in die beidseitigen Ausnehmungen 36 eingreifen. Die Kopfkammer 3 ist auf der Bodenplatte 8 mehrfach positioniert: durch die beidseitigen hohlzylindrischen Vorsprünge 34, die in entsprechende Ausnehmungen der Boden- und Deckplatte eingreifen und durch die im Recorder ein entsprechender (nicht gezeichneter) Paßstift eingreift, durch die beidseitigen Ausnehmungen 35 und 37, in die entsprechende Stifte 85 und 87 hineinpassen sowie durch die Bohrung 31, durch die der vordere mittlere Pfosten 81 der Bodenplatte durchgreift. Die rückseitige, in das Cassetteninnere weisende Wand der Kopfkammer kann gerade oder wie in Figur 3 gezeichnet bogenförmig verlaufend und damit der Form der Bandwickel angepaßt sein.

Daraufhin wird das Magnetband 2 mit den Wickelnaben 21 und 22 eingesetzt, wobei die Ausnehmungen der Wickelnaben in entsprechende Vorsprünge in der Bodenplatte eingreifen, das Magnetband wird über die Führungsrollen 7 sowie durch die Vorsprünge 33 der Kopfkammer geführt, außerdem noch über die auf der Bodenplatte 8 verankerten Führungsstifte 84, deren das Band berührende Umfangsfläche in Längsrichtung zur Verringerung der Auflagefläche wellenförmig geformt sein kann. Zwischen dem Bandwickel und der Boden- sowie Deckplatte können sich auch dem Stand der Technik entsprechend (nicht gezeichnete) Gleitfolien befinden. Abschließend wird die Deckplatte 1 aufgesetzt. Die Deckplatte enthält sechs Löcher 11, in die Schrauben eingeführt werden, welche in die in den sechs Pfosten 81 vorhandenen Bohrungen eingreifen. Auf diese Weise ist eine äußerst stabile und verwindungssteife Verbindung der Cassettenteile gewährleistet.

Die Boden- und Deckplatte bestehen vorzugsweise aus einem transparenten Kunststoff beispielsweise aus Polystyrol, Polycarbonat oder ähnlichen Formmassen. Der Zwischenrahmen besteht aus einem harten und abriebfesten Werkstoff beispielsweise polyacetal, Polycarbonat oder « ABS » (Acrylnitril-Butadien-Styrol), dem bezogen auf das Kunststoffmaterial 5-40 Gew.% Glaskügelchen mit einem ungefähren Durchmesser von 30 µm zugesetzt wurden. Die Kopfkammer besteht ebenfalls aus einem harten abriebfesten Kunststoff, dem 10-20 Gew.% eines weiteren, die Reibung vermindernden Polymeren, beispielsweise Teflon (Polytetrafluorethylen), zugesetzt werden und wobei, bezogen auf die Gesamtmenge an Polymeren, in der Kopfkammer 5-40 Gew.% Glaskügelchen mit einem ungefähren Durchmes-

ser von 30 μm enthalten sind. Den für den Zwischenrahmen und die Kopfkammer verwendeten Kunststoffen können Farbstoffe zugesetzt werden, die je nach geschmacklicher Gestaltung gewählt werden.

Der vorstehend beschriebene Aufbau der erfindungsgemäßen Magnetbandcassette weist gegenüber den bisher bekannten Lösungen folgende Vorteile auf:

der Sandwichaufbau der Cassette sowie die Materialzusammensetzung gewährleisten auch bei erhöhten thermischen oder mechanischen Beanspruchungen eine hohe Stabilität, wodurch unter diesen Bedingungen die guten elektroakustischen Eigenschaften des Magnetbandes erhalten bleiben

alle bandführenden Teile sind reibungsarm ausgestaltet, was sich bei der Tonaufnahme und -wiedergabe vorteilhaft auswirkt

jeder Cassettenteil kann aufgrund seiner benötigten Funktion speziell ausgewählt werden, was die Form und die Materialzusammensetzung anbelangt

der gesamte Bandwickel ist von beiden Seiten gleich gut sichtbar.

Bei all diesen geschilderten Vorteilen besitzt die Cassette auch eine gefällige äußere Form.

## Patentansprüche

1. Magnetbandcassette, insbesondere Compact-Cassette mit zwei planparallel angeordneten Bandwickeln (21, 22), zusammgesetzt aus einer im wesentlichen flachen. vorzugsweise aus transparentem Kunststoff bestehenden Bodensowie Deckplatte (8 bzw. 1), einem Zwischenrahmen (6), der zueinander parallele flache Ober- und Unterseiten aufweist sowie Raum zur Aufnahme der Bandwickel bietet, Umlenkrollen (7) an der Vorderseite der Cassette, einer Kammer (3) mit Andruckfeder (5) für den Magnetkopf sowie mit Bandführungselementen (7) an der Vorderseite der Cassette, sowie Befestigungselemente (11, 61, 81) zum Zusammenbau der Cassette, dadurch gekennzeichnet, daß

der Zwischenrahmen (6) etwa U-förmig ausgebildet ist und die gesamte Rückwand sowie die beiden Seitenwände, aber nur den die Umlenkrollen (7) abdeckenden Teil der Vorderwand der Cassette umfaßt, während der restliche Teil der Vorderseite von einer separaten Kammer (3) mit der Andruckfeder (5) für den Magnetkopf sowie mit den Bandführungselementen (33) gebildet ist, und daß

die Ober- und die Unterseite des Zwischenrahmens (6) an seiner Innen- und/oder Außenkante leistenartige Vorsprünge (Federn) (62) aufweist, die bei zusammengesetzter Cassette in entsprechenden Nuten (82, 12) der Boden- (8) und der Deckplatte (1) sitzen, wobei die Anordnung der Nut und Feder bezüglich Zwischenrahmen (6) sowie Boden(8) und Deckplatte (1) auch vertauscht sein kann.

2. Magnetbandcassette nach Anspruch 1, dadurch gekennzeichnet, daß die Nut und die Feder beim Zwischenrahmen und der Boden- und Deckplatte umlaufend ausgebildet sind.

3. Magnetbandcassette nach Anspruch 1, dadurch gekennzeichnet, daß die Nut und die Feder unterbrochen ausgebildet sind.

4. Magnetbandcassette nach den Ansprüchen 1 bis 3, dadurch gekennzeichnet, daß der Zwischenrahmen (6) im Bereich des Übergangs von der Seitenwand zur Rückwand kreisbogenförmig ausgebildet ist.

5. Magnetbandcassette nach den Ansprüchen 1-4, dadurch gekennzeichnet, daß die Deck- und-/oder die Bodenplatte im Bereich des durch Nut und Feder gegebenen Innenraums der Cassette eine andere Dicke besitzen als im peripheren, an den Außenseiten des Zwischenrahmens (6) anliegenden Teil.

6. Magnetbandcassette nach den Ansprüchen 1 bis 5, dadurch gekennzeichnet, daß die Nut oder die Feder an der Innenkante des Zwischenrahmens (6) angeordnet ist.

7. Magnetbandcassette nach den Ansprüchen 1-6, dadurch gekennzeichnet, daß der Zwischenrahmen (6) aus einem harten polymeren Kunststoff besteht, dem, bezogen auf den Kunststoff, 5-40 Gew.% Glaskügelchen mit einem ungefähren Durchmesser von 30 μm zugesetzt sind.

8. Magnetbandcassette nach der Ansprüchen 1 bis 7, dadurch gekennzeichnet, daß die Kopfkammer (3) aus einem harten polymeren Kunststoff besteht, dem 10-20 Gew.% eines weiteren, die Reibung vermindernden Polymeren zugesetzt werden und wobei, bezogen auf die gesamte Menge der Polymeren, in der Kopfkammer 5-40 Gew.% Glaskügelchen mit einem ungefähren Durchmesser von 30 μm enthalten sind.

9. Magnetbandcassette nach den Ansprüchen 1 bis 8, dadurch gekennzeichnet, daß der harte polymere Kunststoff Polycarbonat und das die Reibung vermindernde Polymer Polytetrafluorethylen ist.

## Claims

1. Magnetic tape cassette, in particular compact cassette having two tape winders (21, 22) arranged in plane parallel, which is composed of an essentially flat base plate and cover plate (8 and 1), preferably consisting of transparent plastic, an intermediate frame (6) which has flat upper and lower sides parallel to one another and which provides space for receiving the wound tape, deflecting rollers (7) on the front side of the cassette, a housing (3) having gravitational spring (5) for the magnetic head and having tape guide elements (7) on the front side of the cassette, and fastening elements (11, 61, 81) to assemble the cassette, characterised in that

the intermediate frame (6) has an approximate U shape and surrounds the entire rear wall and the two side walls, but only surrounds the part of the front wall of the cassette covering the deflecting rollers (7), whereas the remaining part of the front side is formed by a separate housing (3) with the gravitational spring (5) for the magnetic head and with the tape guide elements (33), and in that

the upper side and the lower side of the intermediate frame (6) have strip-like projections (springs) (62) on their inner and/or outer edge which rest in corresponding grooves (82, 12) in the base plate (8) and cover plate (1) when the cassette is assembled, wherein the arrangement of the groove and spring can also be exchanged with regard to the intermediate frame (6) and base plate (8) and cover plate (1).

2. Magnetic tape cassette according to claim 1, characterised in that the groove and the spring are formed all around the intermediate frame and the base plate and cover plate.

3. Magnetic tape cassette according to claim 1, characterised in that the groove and the spring design is interrupted.

4. Magnetic tape cassette according to claims 1 to 3, characterised in that the intermediate frame (6) in the transition region from the side wall to the rear wall has an arc shape.

5. Magnetic tape cassette according to claims 1-4, characterised in that the cover plate and/or base plate have a different thickness in the region of the interior of the cassette determined by groove and spring, from that part at the periphery, resting against the outer sides of the intermediate frame (6).

6. Magnetic tape cassette according to claims 1 to 5, characterised in that the groove or the spring is arranged at the inner edge of the intermediate frame (6).

7. Magnetic tape cassette according to claims 1-6, characterised in that the intermediate frame (6) consists of a hard polymer plastic to which 5-40 wt.%, relative to the plastic, of glass balls having an approximate diameter of 30 μm are added.

8. Magnetic tape cassette according to claims 1 to 7, characterised in that the head housing (3) consists of a hard polymer plastic to which 10-20 wt.% of a further, friction-reducing polymer are added, and wherein the head housing contains 5-40 wt.%, relative to the total amount of polymers, of glass balls having an approximate diameter of 30 μm.

9. Magnetic tape cassette according to claims 1 to 8, characterised in that the hard polymer plastic is polycarbonate and the friction-reducing polymer is polytetrafluoroethylene.

**Revendications**

1. Cassette à bande magnétique, en particulier cassette compacte avec deux bobines de bande (21, 22) disposées dans un plan, constituée d'une plaque de fond et d'une plaque de couverture (8 ou 1), sensiblement planes, de préférence en plastique transparent, d'un cadre intermédiaire (6) qui présente une face supérieure et une face inférieure planes et parallèles l'une à l'autre, et qui offre un espace pour recevoir les bobines, de galets de changement de direction (3) sur la face avant de la cassette, d'une chambre (3) comprenant un ressort de pressage (5) pour la tête magnétique ainsi que des éléments (7) de guidage de la bande sur la face avant de la cassette, ainsi que d'éléments de fixation (11, 61, 81) pour assembler la cassette, caractérisée

en ce que le cadre intermédiaire (6) a un peu près la forme d'un U et entoure toute la paroi arrière ainsi que les deux parois latérales, mais uniquement la partie de la paroi avant de la cassette qui recouvre les galets de changement de direction (7), tandis que la partie restante de la face avant est formée d'une chambre distincte (3) comprenant le ressort de pressage (5) pour la tête magnétique ainsi que les éléments (33) de guidage du ruban, et

en ce que la face supérieure et la face inférieure du cadre intermédiaire (6) présentent, sur leur bord intérieur et/ou extérieur, des saillies (ressorts) (62) en forme de languettes qui, lorsque la cassette est assemblée, s'ajustent dans des rainures correspondantes (82, 12) de la plaque de fond (8) et de la plaque de couverture (1), étant précisé que l'on peut échanger aussi la disposition de la rainure et du ressort entre le cadre intermédiaire (6) d'une part et la plaque de fond (8) et la plaque de couverture (1) d'autre part.

2. Cassette à bande magnétique selon la revendication 1, caractérisée en ce que la rainure et le ressort sont continus dans le cadre intermédiaire ainsi que dans la plaque de fond et la plaque de couverture.

3. Cassette à bande magnétique selon la revendication 1, caractérisée en ce que la rainure et le ressort sont interrompus.

4. Cassette à bande magnétique selon les revendications 1 à 3, caractérisée en ce que le cadre intermédiaire (6) a la forme d'un arc de cercle dans la zone de transition entre la paroi latérale et la paroi arrière.

5. Cassette à bande magnétique selon les revendications 1-4, caractérisée en ce que, dans la zone de l'espace intermédiaire de la cassette défini par la rainure et le ressort, la plaque de couverture et/ou la plaque de fond ont une épaisseur différente que dans la partie périphérique situées contre les côtés extérieurs du cadre intermédiaire (6).

6. Cassette à bande magnétique selon les revendications 1 à 5, caractérisée en ce que la rainure ou le ressort est disposé près du bord intérieur du cadre intermédiaire (6).

7. Cassette à bande magnétique selon les revendications 1-6, caractérisée en ce que le cadre intermédiaire (6) est en un plastique polymère dur auquel on ajoute 5-40 % en poids, rapporté au plastique, de petites billes de verre d'un diamètre d'environ 30 μm.

8. Cassette à bande magnétique selon la revendication 1 à 7, caractérisée en ce que la chambre de tête (3) est constituée d'un plastique polymère dur auquel on ajoute 10-20 % en poids d'un autre polymère diminuant le frottement et étant précisé que dans la chambre de tête sont contenues 5-40 % en poids, rapporte à la quantité totale de polymère, de petites billes de verre d'un diamètre d'environ 30 μm.

9. Cassette à bande magnétique selon les revendications 1 à 8, caractérisée en ce que le plastique polymère dur est du polycarbonate et en ce que le polymère qui réduit le frottement est du polytétrafluoréthylène.

*FIG. 1*

*FIG. 2a*

*FIG. 2b*

*FIG. 3*